# EUROPEAN PATENT SPECIFICATION

(11) **EP 2 445 315 B1**
(45) Date of publication and mention of the grant of the patent: **28.09.2016**
(21) Application number: 11008385.4
(22) Date of filing: 18.10.2011
(51) Int. Cl.: H05B 33/08

(54) **Dimming device and lighting apparatus using same**
Dimmervorrichtung und Beleuchtungsvorrichtung damit
Dispositif de variateur et appareil d'éclairage l'utilisant

(30) Priority: 25.10.2010 JP 2010238875
(43) Date of publication of application: 25.04.2012
(73) Proprietor: Panasonic Intellectual Property Management Co., Ltd., Osaka 540-6207 (JP)
(72) Inventor: Esaki, Sana, Kadoma-shi Osaka (JP); Hiramatu, Akinori, Kadoma-shi Osaka (JP)
(74) Representative: Samson & Partner Patentanwälte mbB

(56) References cited:
- EP-A2- 2 364 064
- WO-A1-2009/039112
- US-A1- 2006 175 986
- US-A1- 2008 079 371

## Description

### Field of the Invention

The present invention relates to a dimming device and a lighting apparatus using the same.

### Background of the Invention

Conventionally, a pulse width modulation (PWM) control or amplitude control system has been employed as an LED (light-emitting diode) dimming control system. In the PWM control system, a current flowing through an LED is intermittently stopped at a low frequency within a range from 100 Hz to several kHz and an average of a light output is adjusted by adjusting a length of time duration of a current interruption. In the amplitude control system, the light output of the LED is adjusted by adjusting an amplitude of the current flowing through the LED. In addition, there have been proposed various dimming devices which perform dimming control in combination of the PWM control system and the amplitude control system. For example, Japanese Patent Appication Publication No. 2005-267999 (JP2005-267999A) discloses a dimming device in which the PWM control system is used when a dimming degree that is determined based on the dimming signal is low (when the light is bright) and the amplitude control system is used when the dimming degree that is determined based on the dimming signal is high (when the light is dark). In addition, Japanese Patent Appication Publication No. 2009-123681 (JP2009-123681A) discloses a dimming device in which the amplitude control system is used when a dimming degree that is determined based on the dimming signal is low and the PWM control system is used when the dimming degree that is determined based on the dimming signal is high.

In the dimming device disclosed in JP2005-267999A, when dimming control is started at a full lighting state, a beat sound is generated in an inductor or a transformer since a lighting circuit is first operated intermittently (100 Hz to several kHz). In the dimming device disclosed in JP2009-123681A, since an amplitude of a current is controlled by changing an ON duty or a frequency of a switching.element at the beginning of dimming, the frequency may be increased to generate a large radiant noise or terminal noise.

WO 2009/039112 A1 discloses a dimming device according to the preamble of independent claim 1.

### Summary of the Invention

While the invention is defined in the independent claims, further aspects of the invention are set forth in the dependent claims, the drawings and the following description.

In view of the above, the present invention provides a dimming device which is capable of reducing a beat sound which may be generated by circuit components and performing stable dimming at a low switching frequency even when a dimming degree that is determined based on the dimming signal is high, and a lighting apparatus using the same.

In accordance with a first aspect of the present invention, a dimming device includes a dimming circuit which controls dimming of a lighting load. The dimming circuit includes a first current adjusting unit for controlling an amplitude of a current flowing through the lighting load and a second current adjusting unit for controlling continuity/discontinuity of the current flowing through the lighting load. An amount of light emitted from the lighting load is adjusted by simultaneously performing the control by the first current adjusting unit and the control by the second current adjusting unit. Here, the simultaneous performance of the current amplitude control and the pulse width modulation control may include a case where start or end timings of the amplitude control and the pulse width modulation control are different from each other or a time zone where both controls are simultaneously performed.

In the dimming device, preferably, upon receiving a dimming signal, the dimming circuit may provide a time difference between start of an amplitude control by the first current adjusting unit and performance of an additional control by the second current adjusting unit.

In the dimming device, preferably, upon receiving a dimming signal, the dimming circuit may provide a time difference between start of a control by the second current adjusting unit and performance of an additional amplitude control by the first current adjusting unit.

In accordance with a second aspect of the present invention, there is provided a lighting apparatus including:
a lighting load; and the above-described dimming device.

### Effects of the Invention

Since the dimming device of this invention simultaneously operates the first current adjusting unit for controlling an amplitude of a current and the second current adjusting unit for controlling continuity/discontinuity of the current flowing through the lighting load, it is possible to reduce a beat sound, which may be generated by circuit components, and perform a stable lighting operation without increasing a switching frequency even when a dimming degree that is determined based on the dimming signal is high.

Since the lighting apparatus of this invention simultaneously operates the first current adjusting unit for controlling an amplitude of a current and the second current adjusting unit for controlling continuity/discontinuity of the current flowing through the lighting load, it is possible to reduce a beat sound, which may be generated by circuit components, and perform a stable lighting operation without increasing a switching frequency even when a dimming degree that is determined based on the dimming signal is high.

### Brief Description of the Drawings

The objects and features of the present invention will become apparent from the following description of embodiments, given in conjunction with the accompanying drawings, in which:
Fig. 1 is a circuit diagram of a dimming device in accordance with this embodiment;
Fig. 2 is a circuit diagram for explaining a general configuration of an integrated circuit for control used for the dimming device;
Fig. 3 show waveform diagrams for explaining an operation of the dimming device;
Fig. 4 is a circuit diagram showing a general configuration of a lighting apparatus using the dimming device;
Figs. 5A to 5D are circuit diagrams showing main parts of the dimming device; and
Fig. 6 is a partially-broken out sectional view for explaining a construction state of a lighting apparatus using the dimming device.

### Detailed Description of the Embodiments

Hereinafter, embodiments of the present invention will be described in detail with reference to the accompanying drawings which form a part of the specification. Throughout the drawings, the same or similar elements are denoted by the same reference numerals.

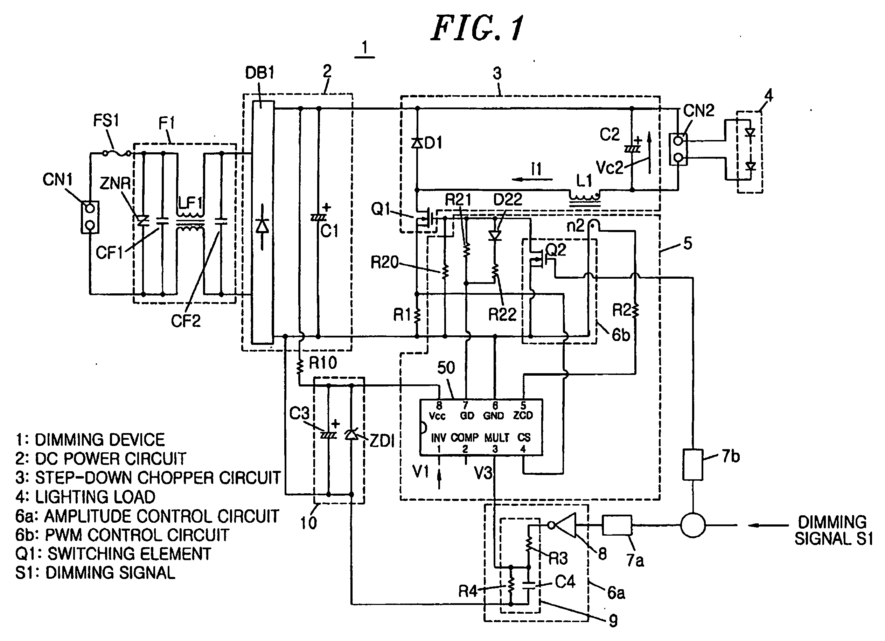

Now, an embodiment of a dimming device of the present invention will be described with reference to Figs. 1 to 5. Fig. 1 is a circuit diagram of a dimming device 1 including a power connector CN1 to which a power source is connected and an output connector CN2 to which a lighting load is connected.

A commercial AC power source (of, for example, 100 V and 50/60 Hz) is connected to the power connector CN1. A lighting load 4 including semiconductor light-emitting devices such as light-emitting diodes (LEDs) is connected to the output connector CN2. Although in this embodiment the lighting load 4 includes a plurality of LEDs connected in series, the lighting load 4 may include a single LED. Further, the lighting load 4 may include a plurality of LEDs connected in parallel or in combination of serial and parallel.

A DC power circuit 2 is connected to the power connector CN1 via a current fuse FS1 and a filter circuit F1. The filter circuit F1 includes a surge voltage absorber ZNR, capacitor filters CF1 and CF2, and a common mode choke coil LF1.

The DC power circuit 2 includes a full-wave rectifier DB1 for performing full-wave rectification for an AC voltage input via the filter circuit F1 and a smoothing capacitor C1 for smoothing the rectified AC voltage from the full-wave rectifier DB1. The DC power circuit 2 is not limited to a rectifying/smoothing circuit including the full-wave rectifier DB1 and the smoothing capacitor C1 but may be a power factor correction circuit using a boosting chopper circuit.

A step-down chopper circuit 3 is connected to an output terminal of the DC power circuit 2. The step-down chopper circuit 3 includes an inductor L1, a switching element Q1, a regenerative diode D1 and an output capacitor C2 as main components. The inductor L1 is connected in series to the lighting load 4 which is turned on/off by a direct current. The switching element Q1 may be a metal-oxide-semiconductor field effect transistor (MOSFET) or the like and is connected in series between a series circuit of the inductor L1 and the lighting load 4 and the output terminal of the DC power circuit 2 via a resistor R1 for current detection. The regenerative diode D1 is connected in parallel to the series circuit of the inductor L1 and the lighting load 4 such that energy stored in the inductor L1 is emitted to the lighting load 4 when the switching element Q1 is turned off. The output capacitor C2 connected in parallel to the lighting load 4 smoothes pulsating components, which may be produced due to turn-on/off of the switching element Q1, and its capacitance is set such that the smoothed direct current flows into the lighting load 4.

The switching element Q1 of the step-down chopper circuit 3 is driven to be turned on/off at a high frequency under control of a control circuit 5. The control circuit 5 includes a control integrated circuit 50 such as, for example, L6562 (available from STME company), and peripheral circuits. The control integrated circuit 50 is originally an integrated circuit for controlling a boosting chopper circuit for power factor correction and contains a multiplier and other various components for controlling the step-down chopper circuit. In addition, the control integrated circuit 50 includes a function for controlling a peak value of an input current in order to make an average value of the input current analogous to an envelop of an input voltage, and a zero-cross control function, both functions of which are incorporated into one chip and are dedicated for control of the step-down chopper circuit 3.

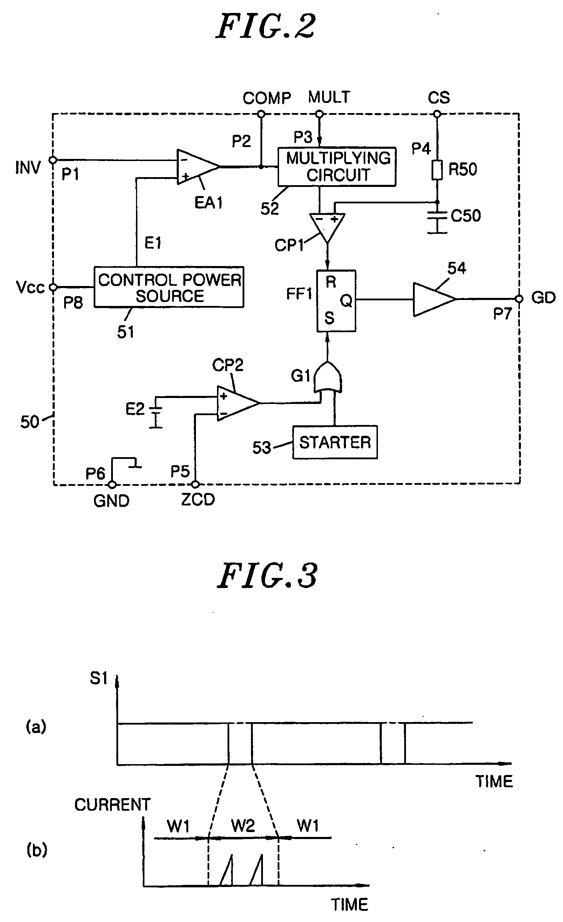

Fig. 2 is a simplified circuit diagram of the control integrated circuit 50. As shown, in the control integrated circuit 50, a first pin P1 (INV) is connected to an inverted input terminal of an error amplifier EA1, a second pin P2 (COMP) is connected to an output terminal of the error amplifier EA1 and a third pin P3 (MULT) is connected to an input terminal of a multiplying circuit 52. A fourth pin P4 (CS) is a chopper current detection terminal and is connected to a node between the switching element Q1 and the resistor R1. A fifth pin P5 (ZCD) is a zero-cross detection terminal and is connected to a secondary coil n2 of the inductor L1 via a resistor R2. A sixth pin P6 (GND) is a ground terminal and is connected to a circuit ground (an output terminal at a lower voltage side of the DC power circuit 2). A seventh pin P7 (GD) is a gate drive terminal by an output of which a gate of a switching element Q2 is driven. An eighth pin P8 (Vcc) is a power terminal. When a source voltage, that is equal to or higher than a predetermined voltage, is applied between the power terminal and the ground terminal from a power source circuit 10 which will be described later, reference voltages E1 and E2 are generated by an internal control power source circuit 51, while enabling other various circuits within the control integrated circuit 50. In this embodiment, the power circuit 10 includes a smoothing capacitor C3 into which a charging current is supplied from a positive electrode of the smoothing capacitor C1 via a resistor R10 having high resistance, and a zener diode ZD1 for limiting a voltage across the smoothing capacitor C3 and supplies a source voltage from the smoothing capacitor C3 to the power terminal Vcc. A circuit to supply power to the smoothing

capacitor C3 of the power circuit 10 is not limited to that described above but may be a circuit to charge the capacitor C3 from the secondary coil n2 of the inductor L1 in a normal state in order to supply power with further enhanced efficiency.

When the control integrated circuit 50 is powered on and a start pulse is inputted to a set input terminal S of a flip-flop FF1 by means of a starter circuit 53, a Q output of the flip-flop FF1 becomes logic "High." Accordingly, when the seventh pin P7 (gate drive terminal GD) becomes logic "High" through a driving circuit 54, a gate driving voltage obtained by voltage division by resistors R21 and R20 is applied between a gate and a source of the switching element Q1. Since the resistor R1 is a resistor for current detection and is of a very low resistance, it has little effect on the driving voltage applied between the gate and the source.

When the switching element Q1 is turned on, a current flows from the positive electrode of the capacitor C1, through the output capacitor C2, the inductor L1, the switching element Q1 and the resistor R1, to a negative electrode of the capacitor C1. At this time, a chopper current i1 flowing through the inductor L1 substantially linearly increases unless the inductor L1 is magnetically saturated. This current is detected by the resistor R1 and is inputted to the fourth pin P4 (CS) of the control integrated circuit 50.

As mentioned above, the fourth pin P4 (CS) of the control integrated circuit 50 is the chopper current detection terminal. A voltage inputted to the fourth pin P4 is inputted to a (+) input terminal of a comparator CP1 via a noise filter including a resistor R50 and a capacitor C50. An output voltage of the multiplying circuit 52 is inputted as a reference voltage to a (-) input terminal of the comparator CP1. This reference voltage (the output voltage of the multiplying circuit 52) is determined based on an input voltage V3 of the third pin P3 (MULT), and a voltage obtained by a difference amplifier EA1 which amplifies a difference between an application voltage V1 of the first pin P1 (INV) and the reference voltage E1.

If the input voltage of the chopper current detection terminal CS exceeds the reference voltage (the output voltage of the multiplying circuit 52), an output from the comparator CP1 becomes logic "High" and a reset signal is inputted to a reset input terminal R of the flip-flop FF1. Accordingly, if the Q output of the flip-flop FF1 becomes logic "low," the driving circuit 54 operates to draw current from the seventh pin P7 (gate drive terminal GD). At this time, a diode D22 connected to the gate of the switching element Q1 is turned on and charges stored between the gate and source of the switching element Q1 are discharged via a resistor R22, thereby quickly turning off the switching element Q1.

When the switching element Q1 is turned off, electromagnetic energy stored in the inductor L1 during turning-on period of the switching element Q1 is transferred to the output capacitor C2 via the regenerative diode D1. At this time, since a voltage across the inductor L1 is clamped to a voltage Vc2 of the output capacitor C2, the current i1 flowing through the inductor L1 decreases with a constant slope (di/dt≒Vc2/L1).

Here, a voltage corresponding to the slope with which the current i1 decreases is generated in the secondary coil n2 of the inductor L1 while the current i1 is flowing through the inductor L1. When the current i1 ceases to flow through the inductor L1, a voltage across the secondary coil n2 disappears and a timing of the disappearance is detected from an input voltage of the fifth pin P5 (zero-cross detection terminal ZCD).

In the control integrated circuit 50, the fifth pin P5 (zero-cross detection terminal ZCD) is connected to a (-) input terminal of a comparator CP2 for zero-cross detection and the reference voltage E2 for zero-cross detection is applied to a (+) input terminal of the comparator CP2.

Here, when the voltage across the secondary coil n2 inputted to the fifth pin P5 disappears, an output of the comparator CP2 becomes logic "High" and a set pulse is applied to the set input terminal S of the flip-flop FF1 via an OR gate G1, thereby making the Q output of the flip-flop FF1 logic "High." Accordingly, a voltage level of the seventh pin P7 (gate drive terminal GD) becomes logic "High" through the driving circuit 54, thereby turning on the switching element Q1. Therefore, such operation is repeated to alternate between turning on and off of the switching element Q1.

Thus, a DC voltage obtained by dropping the output voltage of the capacitor C1 appears in the output capacitor C2 and is applied to the lighting load 4 via the output connector CN2. In this embodiment, when the lighting load 4 includes a plurality of light-emitting diodes (LEDs) connected in series, assuming that a forward voltage of one LED is Vf and the number of LEDs connected in series is n, the voltage Vc2 of the output capacitor C2 is clamped to about (nxVf).

Although in this embodiment the timing at which the voltage of the secondary coil n2 of the inductor L1 disappears is detected to detect a timing at which the current i1 flowing through the inductor L1 is substantially zero, the timing at which the current i1 is zero may be detected by other unit, such as by detecting increase in a backward voltage of the regenerative diode D1, detecting decrease in a voltage across the switching element Q1, or alternative unit as long as a timing at which regenerative current disappears can be detected.

Next, a dimming circuit for dimming the lighting load 4 based on a dimming signal S1 will be described. As used herein, a dimming signal S1 includes a PWM signal having a low frequency (about 1 kHz) and has an ON duty varied depending on a dimming ratio.

In this embodiment, the dimming circuit includes an amplitude control circuit (first current adjusting unit) 6a for controlling an amplitude of the current flowing through the lighting load 4, and a PWM control circuit (second current adjusting unit) 6b for continuing/discontinuing the current flowing through the lighting load 4. In addition, timer circuits 7a and 7b to delay the dimming signal S1 by respective predetermined delay times are provided in the front stages of the amplitude control circuit 6a and the PWM control circuit 6b, respectively. The respective delay times of the timer circuits 7a and 7b are separately set.

The amplitude control circuit 6a is used to control light emitted from the lighting load 4 by controlling an amplitude of a current flowing through the lighting load 4 in accordance with the dimming signal. Since the above-described control integrated circuit 50 has the function of controlling a peak of a current flowing through the switching element Q1 to be increased with an increase in the voltage V3 applied to the third pin P3 (MULT), the amplitude control circuit 6a performs the amplitude control by using this function.

The amplitude control circuit 6a includes a NOT gate 8 for inverting logic (High/Low) of the dimming signal S1 delayed by the timer circuit 7a, and an integrating circuit 9 for integrating an output of the NOT gate 8. An output of the integrating circuit 9 is inputted to the third pin P3 of the control integrated circuit 50. The integrating circuit 9 is a CR integrating circuit including resistors R3 and R4 connected in series to an output terminal of the NOT gate 8 and a capacitor C4 connected in parallel to the lower resistor R4. The dimming signal S1, which includes a PWM signal having a low frequency and is inputted via the timer circuit 7a, is inverted by the NOT gate 8 and then is converted into a DC voltage whose magnitude is inversely proportional to an ON duty of the dimming signal S1.

In this embodiment, if the ON duty of the dimming signal S1 including the PWM signal is reduced and a period for logic "High" is shortened, since the amplitude control circuit 6a integrates the inverted dimming signal S1, a voltage applied to the third pin P3 is increased. Accordingly, as the control integrated circuit 50 controls an output of the seventh pin P7 to increase the peak of the current flowing through the switching element Q1, the amplitude of the current flowing through the lighting load 4, which is smoothed by the capacitor C2, becomes larger, thereby increasing a light output of the lighting load 4. In addition, as turn-on time of the switching element Q1 is lengthened, an oscillation frequency of the step-down chopper circuit 3 is lowered.

On the other hand, if the ON duty of the dimming signal S1 including the PWM signal is increased and the period for logic "High" is lengthened, since the amplitude control circuit 6a integrates the inverted dimming signal S1, the voltage applied to the third pin P3 is decreased. Accordingly, as the control integrated circuit 50 controls the output of the seventh pin P7 to decrease the peak of the current flowing through the switching element Q1, the amplitude of the current flowing through the lighting load 4, which is smoothed by the capacitor C2, becomes smaller, thereby decreasing the light output of the lighting load 4. In addition, as turn-on time of the switching element Q1 is shortened, the oscillation frequency of the step-down chopper circuit 3 is heightened.

In this way, the light output of the lighting load 4 can be controlled by changing the amplitude of the current flowing through the switching element Q1 in accordance with a duty cycle of the dimming signal S1. However, if such dimming is controlled with only the amplitude control circuit 6a, the lower limit of a dimming ratio is about 10% and the oscillating frequency of the step-down chopper circuit 3 rises to several hundreds kHz within the lower limit of the dimming ratio.

Next, the PWM control circuit 6b for continuing/discontinuing the current flowing through the lighting load 4 by intermittently stopping a high frequency chopper operation by the step-down chopper circuit 3 in accordance with the PWM signal having a low frequency will be described.

The PWM control circuit 6b includes a switching element Q2 containing MOSFET having a drain and a source connected to each other between a control electrode of the switching element Q1 and a ground (a negative electrode of the capacitor C1). An output of the timer circuit 7b is inputted to a gate of the switching element Q2.

The dimming signal S1 is a square wave voltage signal having a low frequency (for example, 1 kHz) as well as a PWM signal in which a period of a Low level during one cycle becomes longer (i.e., an ON duty becomes smaller) as the dimming signal becomes lower (i.e., dimming output becomes brighter).

In the PWM control circuit 6b, the dimming signal S1 including the PWM signal having a low frequency is delayed by the timer circuit 7b and then is inputted to the gate of the switching element Q2.

When its gate voltage is logic "High," the switching element Q2 is turned on and is short-circuited between the control electrode of the switching element Q2 and the ground. While the switching element Q2 is turned on, a node between the resistor R21 and the switching element Q2 always is at a Low level. Accordingly, even if a voltage of the seventh pin P7 (gate drive terminal GD) of the control integrated circuit 50 alternates between logic "High" and "Low" at a high frequency, its gate drive output is consumed in the resistor R21 and the switching element Q1 remains turned off to stop the chopper operation.

On the other hand, when its gate voltage is logic "Low," the switching element Q2 is turned off and impedance becomes high between the drain and the source, which means that the switching element Q2 is disconnected. Accordingly, while the switching element Q2 is turned off, as a voltage of the seventh pin P7 (gate drive terminal GD) of the control integrated circuit 50 alternates between logic "High" and "Low" at a high frequency, the switching element Q1 alternates between turn-on and turn-off, thereby allowing a normal chopper operation.

As a result, the chopper operation of the step-down chopper circuit 3 is continued/discontinued by the PWM control circuit 6b and a ratio of a period during which the chopper operation is performed to a period during which the chopper operation is stopped becomes equal to a ratio of a Low period to a High period of the dimming signal S1 including the PWM signal. A constant current in accordance with the chopper operation flows into the lighting load 4 in the period during which the step-down chopper circuit 3 performs the chopper operation, while supply of the current to the lighting load 4 is stopped in the period during which the step-down chopper circuit 3 stops the chopper operation. Accordingly, a current in accordance with a ratio of a Low period to one cycle of the PWM signal is supplied to the lighting load 4, thereby allowing dimming of the lighting load 4 by the PWM control circuit 6b. If the ON duty of the dimming signal S1 is decreased, the stop period of the step-down chopper circuit 3 becomes shortened and thus the dimming signal becomes lower. On the other hand, if the ON duty of the dimming signal S1 is increased, the stop period of the step-down chopper circuit 3 becomes lengthened and thus the dimming signal becomes higher.

However, if the dimming control is performed with only the PWM control circuit 6b, since the operation state and the stop state of the step-down chopper circuit 3 are cyclically repeated under the full light state, that is, a state where a rated current flows into the lighting load 4, a relatively large beat sound is produced by an inductor or a transformer. In addition, since the stop period of the step-down chopper circuit 3 is lengthened near the lower limit of the dimming ratio, the operation period of the switching element Q1 becomes very short. In Fig. 3, (a) is a waveform diagram of the dimming signal S1 and (b) is a waveform diagram of a current flowing into the switching element Q1. In (b) of Fig. 3, a time axis is shown to be enlarged. In a period during which the dimming signal S1 has logic "High" (a period W1 in (b) of Fig. 3), the chopper operation of the step-down chopper circuit 3 is stopped and the switching element Q1 is turned off. On the other hand, in a period during which the dimming signal S1 has logic "Low" (a period W2 in (b) of Fig. 3), the step-down chopper circuit 3 performs the chopper operation and the switching element Q1 is turned on/off. However, in the period W2, the operation of the step-down chopper circuit 3 becomes unstable since the operation period of the switching element Q1 is short near the lower limit of the dimming ratio and the switching element Q1 is turned on just twice.

In this embodiment, the dimming device 1 performs both of the amplitude control operation by means of the amplitude control circuit 6a and the control of continuing/discontinuing the load current i1 by means of the PWM control circuit 6b. In short, the dimming device 1 performs the dimming control of intermittently cutting off the current while reducing the amplitude of the current. In comparison with performance of only one of the amplitude control and the current continuity/discontinuity control, since the current is continued/discontinued under the state where the current flowing into the lighting load 4 is increased near the upper limit of the dimming ratio, it is possible to reduce a beat sound which may be produced by circuit components such as an inductor and so on. In addition, since the control of continuing/discontinuing the current flowing through the lighting load 4 and the amplitude control are simultaneously performed near the lower limit of the dimming ratio, the oscillation frequency of the step-down chopper circuit 3 is insignificantly increased (100 kHz or so in this circuit) as compared to dimming by only the control of the amplitude. In addition, since current can be reduced up to several tens µA during a relatively long operation period of the switching element Q1, it is possible to perform the dimming control stably.

In addition, although in this embodiment the gate voltage of the switching element Q2 of the PWM control circuit 6b is controlled based on the dimming signal S1 including the PWM signal having the low frequency, the operation of the step-down chopper circuit 3 may be continued/discontinued by controlling one or more of the application voltage of the first pin P1 (INV), the application voltage of the third pin P3 (MULT), the application voltage of the fourth pin P4 and the application voltage of the fifth pin P5 (ZCD) of the control integrated circuit 50 based on the dimming signal S1.

In addition, in this embodiment, the timer circuits 7a and 7b are provided in the front stages of the amplitude control circuit 6a and the PWM control circuit 6b, respectively. Time setting of the timer circuits 7a and 7b may provide a time difference between the timing at which the amplitude control by the amplitude control circuit 6a is started and the timing at which the continuity/discontinuity control by the PWM control circuit 6b is started.

Here, when the delay time by the timer circuit 7a is set to be shorter than the delay time by the timer circuit 7b, the continuity/discontinuity control by the PWM control circuit 6b is started after the amplitude control by the amplitude control circuit 6a is started. Accordingly, the amplitude control of the current flowing through the lighting load 4 is first performed at the start of dimming and then the current continuity/discontinuity control is additionally performed. Since the current continuity/discontinuity control can make a greater amount of change in a light output than the amplitude control, it is possible to switch to a dimming state slowly at the start of dimming by first starting the amplitude control.

On the other hand, when the delay time by the timer circuit 7b is set to be shorter than the delay time by the timer circuit 7a, the amplitude control by the amplitude control circuit 6a is started after the continuity/discontinuity control by the PWM control circuit 6b is started. Accordingly, since the control of continuing/discontinuing the current flowing through the lighting load 4 is first performed at the start of dimming and then the current amplitude control is additionally performed, it is possible to make a transition to a dimming state quickly after the start of dimming.

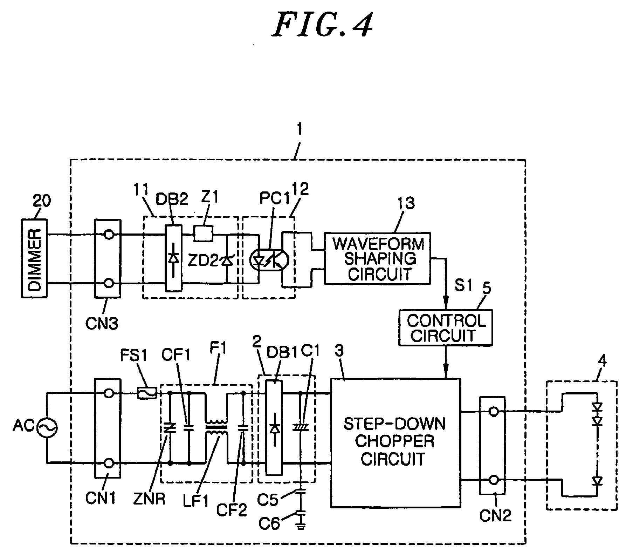

Fig. 4 shows an overall configuration of a lighting apparatus incorporating the above-described dimming device 1. The lighting apparatus includes a power connector CN1 to which an AC power source is connected, an output connector CN2 to which the lighting load 4 is connected, and a connector CN3 to which a dimming signal line from a dimmer 20 is connected.

A DC power circuit 2 is connected to the power connector CN1 via a current fuse FS1 and a filter circuit F1 and an AC voltage is rectified and smoothed by the DC power circuit 2. A negative electrode of a smoothing capacitor C1 included in the DC power circuit 2 is connected at a high frequency to a housing (not shown) of the lighting apparatus via capacitors C5 and C6.

A dimming signal S1 including a duty-variable square wave voltage signal having a frequency of 1 kHz and an amplitude of 10 V is inputted from the dimmer 20 to the connector CN3. A rectifying circuit 11 connected to the connector CN3 is a circuit for making the dimming signal line connected to the connector CN3 nonpolar and operates normally even when the dimming signal line is reversely connected. That is, the dimming signal S1 inputted from the connector CN3 is full wave-rectified by a full wave rectifier DB2 to generate a square wave voltage signal across a zener diode ZD2 via an impedance element Z1 such as a resistor or the like. The square wave voltage signal generated across the zener diode ZD2 is inputted to an isolation circuit 12 including a photo coupler PC1 and the dimming signal S1 is transferred to a control circuit 5 with the dimming signal line electrically insulated from the dimming device 1. Then, the dimming signal S1 outputted from the isolation circuit 12 is shaped by a waveform shaping circuit 13 and is inputted, as a definite PWM signal having High and Low levels, to the control circuit 5. If the dimming signal line from the dimmer 20 is lengthened, the square wave voltage signal transmitted over a long distance from the dimmer 20 may have a distorted waveform. The waveform shaping circuit 13 is provided to eliminate such distortion.

The control circuit 5 has dimming circuits such as the above-described amplitude control circuit 6a and PWM control circuit 6b. The amplitude control circuit 6a controls an amplitude of a current flowing through the lighting load 4 based on the dimming signal S1. The PWM control circuit 6b performs the control of continuing/discontinuing the current flowing through the lighting load 4 based on the dimming signal S1. As described above, by performing both of the control by the amplitude control circuit 6a and the control by the PWM control circuit 6b, it is possible to perform the dimming of the lighting load 4 and reduce an output ripple and a beat sound.

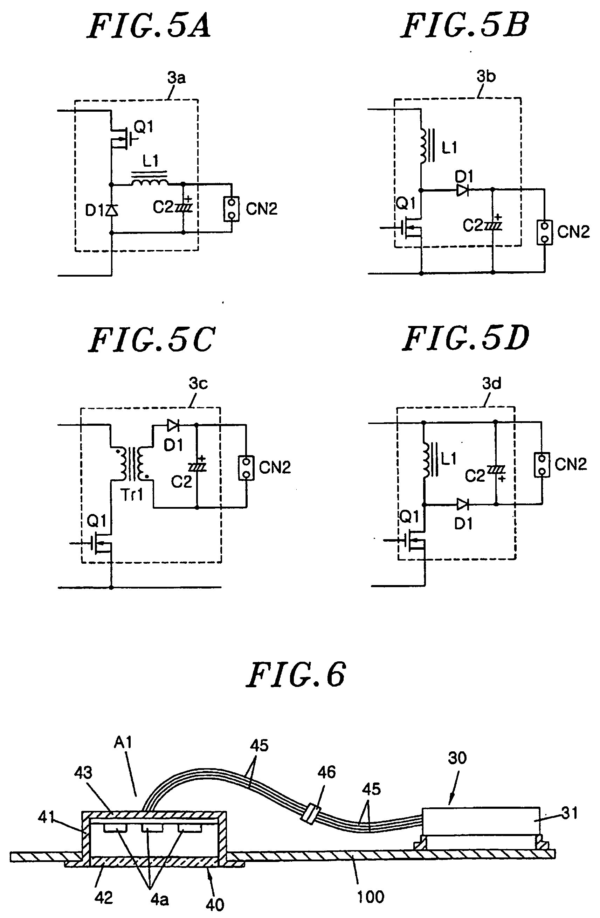

In the above dimming device 1, although the control circuit for controlling the current flowing through the lighting load 4 has been illustrated with a non-isolation back converter type circuit, any type of circuit may be employed as long as it can perform a constant current control or constant voltage control. For example, as shown in Figs. 5A to 5D, control circuits 3a to 3d including an isolation fly back type converter, a forward converter or the like may be employed. These control circuits 3a to 3d are well known in the art and, therefore, explanation of which will be omitted.

Next, a lighting apparatus including the above-described dimming device 1 will be described with reference to Fig. 6. A lighting apparatus A1 is a power source-equipped illuminator in which a lighting load and a power circuit are accommodated in respective housings, and includes a power block 30 and a lamp block 40 connected via a power line.

The power block 30 has a circuit board (not shown) on which the above-described dimming device 1 is formed, and a metal housing 31 in which the circuit board is accommodated, and is disposed in the back of a ceiling 100.

A housing 41 of the lamp block 40 is formed of a metal cylindrical body with its bottom opened. An opening at the bottom of the lamp block 40 is blocked by a light diffuser 42. Within the housing 41 is accommodated a circuit board 43 on which a plurality of light-emitting diodes 4a as the lighting load 4 is mounted, with the light-emitting diodes 4a facing the light diffuser 42.

The housing 41 is secured to the ceiling 100 with its upper portion inserted in a burying hole provided in the ceiling 100 and is connected to the dimming device 1 within the power block 30 via an electric wire 45 and a connector 46.

Thus, since the circuit board of the dimming device 1 can be accommodated in the housing 31 other than the housing 41 of the lamp block 40 in which the lighting load 4 is accommodated, the lamp block 40 can be thinned and the power block 30 can be freely installed in a place within a reach range of the electric wire 45.

Although in this embodiment the lighting apparatus A1 accommodates the dimming device 1 and the lighting load 4 in the respective housings 31 and 41, the dimming device 1 may be accommodated in a housing such as the lamp block 40.

The dimming device 1 in this embodiment is not limited to an illumination device but may be used as a light source such as a backlight of a liquid crystal monitor, or other light sources of a copy machine, a scanner, a projector and so on.

Although in the above embodiment the lighting load 4 has been illustrated with light-emitting diodes, the lighting load 4 is not limited thereto but may be, for example, organic electroluminescent (EL) devices, semiconductor laser devices and so on.

While the invention has been shown and described with respect to the embodiments, it will be understood by those skilled in the art that various changes and modification may be made without departing from the scope of the invention as defined in the following claims.

## Claims

1. A dimming device (1) comprising:
a dimming circuit which controls dimming of a lighting load (4);
a step-down chopper circuit (3) connected to the lighting load (4), the step-down chopper circuit (3) being configured to perform a high frequency chopper operation;
**characterized in that** the dimming circuit includes:
a first current adjusting unit (6a) adapted for receiving a PWM dimming signal (S1) and for controlling an amplitude of a current flowing through the lighting load (4) by controlling the high frequency chopper operation such that the amplitude of the current increases if an on-duty ratio of the received PWM dimming signal (S1) including a high level and a low level decreases and the amplitude of the current decreases if the on-duty ratio of the received PWM signal (S1) increases; and
a second current adjusting unit (6b) adapted for receiving the PWM dimming signal (S1) and for controlling continuity and discontinuity of the current flowing through the lighting load (4) by controlling the step-down chopper circuit (3) to stop the high frequency chopper operation while a level of the received PWM dimming signal (S1) is the high level and to perform the high frequency chopper operation while the level of the received PWM dimming signal (S1) is the low level,
wherein an amount of light emitted from the lighting load (4) is adjusted by simultaneously performing a control by the first current adjusting unit (6a) and a control by the second current adjusting unit (6b).

2. The dimming device (1) of claim 1, wherein the dimming circuit further includes a first timer circuit (7a) configured to delay the dimming signal (S1) by a first delay time and provide the dimming signal (S1) delayed by the first delay time to the first current adjusting unit (6a) and a second timer circuit (7b) configured to delay the dimming signal (S1) by a second delay time and provide the dimming signal (S1) delayed by the second delay time to the second current adjusting unit (6b), and
wherein the first delay time is set to be shorter than the second delay time so that said controlling the continuity and the discontinuity of the current by the second current adjusting unit (6b) is started after starting said controlling the amplitude of the current by the first current adjusting unit (6a).

3. The dimming device (1) of claim 1, wherein the dimming circuit further includes a first timer circuit (7a) configured to delay the dimming signal (S1) by a first delay time and provide the dimming signal (S1) delayed by the first delay time to the first current adjusting unit (6a) and a second timer circuit (7b) configured to delay the dimming signal (S1) by a second delay time and provide the dimming signal (S1) delayed by the second delay time to the second current adjusting unit (6b), and
wherein the second delay time is set to be shorter than the first delay time so that said controlling the continuity and the discontinuity of the current by the first current adjusting unit (6a) is started after starting said controlling the amplitude of the current by the second current adjusting unit (6b).

4. A lighting apparatus (A1) comprising:
a lighting load (4); and
the dimming device (1) described in any one of claims 1 to 3.

## Patentansprüche

1. Dimmvorrichtung (1), umfassend:
ein Dimmschaltkreis, der ein Dimmen von einer Beleuchtungslast (4) steuert;
ein Abwärtsstellerschaltkreis (3), der mit der Beleuchtungslast (4) verbunden ist, wobei der Abwärtsstellerschaltkreis (3) konfiguriert ist, einen Hochfrequenz-Gleichstromstellerbetrieb durchzuführen;
**dadurch gekennzeichnet, dass** der Dimmschaltkreis enthält:
eine erste Stromanpassungseinheit (6a), die angepasst ist, zum Empfangen eines PWM Dimmsignals (S1) und zum Steuern einer Amplitude von einem Strom, der durch die Beleuchtungslast (4) fließt, durch Steuern des Hochfrequenz-Gleichstromstellerbetriebs, so dass die Amplitude von dem Strom größer wird, falls eine relative Einschaltdauer von dem empfangenen PWM Dimmsignal (S1), das ein hohes Niveau und ein niedriges Niveau enthält, abnimmt, und dass die Amplitude von dem Strom kleiner wird, falls die relative Einschaltdauer von dem empfangenen PWM Dimmsignal (S1) zunimmt; und
eine zweite Stromanpassungseinheit (6b), die angepasst ist, zum Empfangen des PWM Dimmsignals (S1) und zum Steuern von Kontinuität und Diskontinuität von dem Strom, der durch die Beleuchtungslast (4) fließt, durch Steuern des Abwärtsstellerschaltkreises (3), um den Hochfrequenz-Gleichstromstellerbetrieb zu stoppen, während ein Niveau von dem empfangenen PWM Dimmsignal (S1) das hohe Niveau ist und um den Hochfrequenz-Gleichstromstellerbetrieb durchzuführen, während das Niveau von dem empfangenen PWM Dimmsignal (S1) das niedrige Niveau ist,
wobei eine Menge an Licht, die von der Beleuchtungslast (4) emittiert wird, mittels gleichzeitigem Durchführen einer Steuerung durch die erste Stromanpassungseinheit (6a) und einer Steuerung durch die zweite Stromanpassungseinheit (6b) angepasst wird.

2. Dimmvorrichtung (1) nach Anspruch 1, bei der der Dimmschaltkreis weiterhin einen ersten Timerschaltkreis (7a) enthält, der konfiguriert ist, um das Dimmsignal (S1) durch eine erste Verzögerungszeit zu verzögern, und um das Dimmsignal (S1), das durch die erste Verzögerungszeit verzögert wird, der ersten Stromanpassungseinheit (6a) bereitzustellen, und einen zweiten Timerschaltkreis (7b), der konfiguriert ist, um das Dimmsignal (S1) durch eine zweite Verzögerungszeit zu verzögern, und das Dimmsignal (S1), das durch die zweite Verzögerungszeit verzögert wird, der zweiten Stromanpassungseinheit (6b) bereitzustellen, und
wobei die erste Verzögerungszeit festgelegt ist, kürzer als die zweite Verzögerungszeit zu sein, so dass das Steuern der Kontinuität und der Diskontinuität von dem Strom mittels der zweiten Stromanpassungseinheit (6b) nach einem Starten des Steuerns der Amplitude von dem Strom mittels der ersten Stromanpassungseinheit (6a) gestartet wird.

3. Dimmvorrichtung (1) nach Anspruch 1, bei der der Dimmschaltkreis weiterhin einen ersten Timerschaltkreis (7a) enthält, der konfiguriert ist, um das Dimmsignal (S1) durch eine erste Verzögerungszeit zu verzögern, und das Dimmsignal (S1), das durch die erste Verzögerungszeit verzögert wird, der ersten Stromanpassungseinheit (6a) bereitzustellen, und einen zweiten Timerschaltkreis (7b), der konfiguriert ist, um das Dimmsignal (S1) durch eine zweite Verzögerungszeit zu verzögern, und das Dimmsignal (S1), das durch die zweite Verzögerungszeit verzögert wird, der zweiten Stromanpassungseinheit (6b) bereitzustellen, und
wobei die zweite Verzögerungszeit festgelegt ist, kürzer als die erste Verzögerungszeit zu sein, sodass das Steuern der Kontinuität und der Diskontinuität von dem Strom mittels der ersten Stromanpassungseinheit (6a) gestartet wird, nach einem Starten des Steuerns der Amplitude von dem Strom mittels der zweiten Stromanpassungseinheit (6b).

4. Beleuchtungsvorrichtung (A1) umfassend:
eine Beleuchtungslast (4); und
die Dimmvorrichtung (1), wie in einem der Ansprüche 1 bis 3 beschrieben.

## Revendications

1. Dispositif gradateur (1) comprenant :
un circuit de gradation commandant la gradation d'une charge d'éclairage (4) ;
un circuit découpeur abaisseur (3) connecté à la charge d'éclairage (4), le circuit découpeur abaisseur (3) étant conçu pour effectuer une opération de découpage à haute fréquence ;
**caractérisé en ce que** le circuit de gradation comprend :
une première unité de réglage de courant (6a) conçue pour recevoir un signal de gradation PWM (S1) et pour contrôler l'amplitude d'un courant parcourant la charge d'éclairage (4) en commandant l'opération de découpage à haute fréquence, de manière que l'amplitude du courant augmente si un taux d'utilisation du signal de gradation PWM reçu (S1) comprenant un haut niveau et un bas niveau diminue et que l'amplitude du courant diminue si le taux d'utilisation du signal de gradation PWM reçu (S1) augmente ; et
une seconde unité de réglage de courant (6b) conçue pour recevoir le signal de gradation PWM (S1) et pour commander la continuité et la discontinuité du courant parcourant la charge d'éclairage (4) en commandant le circuit découpeur abaisseur (3) pour arrêter l'opération de découpage à haute fréquence lorsqu'un niveau du signal de gradation PWM reçu (S1) est le haut niveau et pour effectuer l'opération de découpage à haute fréquence lorsque le niveau du signal de gradation PWM reçu (S1) est le bas niveau,
dans lequel une quantité de lumière émise depuis la charge d'éclairage (4) est réglée par exécution simultanée d'une commande par la première unité de réglage de courant (6a) et d'une commande par la seconde unité de réglage de courant (6b).

2. Dispositif gradateur (1) selon la revendication 1, dans lequel le circuit de gradation comprend en outre un premier circuit de temporisation (7a) conçu pour retarder le signal de gradation (S1) d'un premier temps de retard et délivrer le signal de gradation (S1) retardé du premier temps de retard à la première unité de réglage de courant (6a), et un second circuit de temporisation (7b) conçu pour retarder le signal de gradation (S1) d'un second temps de retard et délivrer le signal de gradation (S1) retardé du second temps de retard à la seconde unité de réglage de courant (6b), et
dans lequel le premier temps de retard est réglé pour être plus court que le second temps de retard, de manière que ladite commande de la continuité et de la discontinuité du courant par la seconde unité de réglage de courant (6b) soit démarrée après le démarrage de ladite commande de l'amplitude du courant par la première unité de réglage de courant (6a).

3. Dispositif gradateur (1) selon la revendication 1, dans lequel le circuit de gradation comprend en outre un premier circuit de temporisation (7a) conçu pour retarder le signal de gradation (S1) d'un premier temps de retard et délivrer le signal de gradation (S1) retardé du premier temps de retard à la première unité de réglage de courant (6a), et un second circuit de temporisation (7b) conçu pour retarder le signal de gradation (S1) d'un second temps de retard et délivrer le signal de gradation (S1) retardé du second temps de retard à la seconde unité de réglage de courant (6b), et
dans lequel le second temps de retard est réglé pour être plus court que le premier temps de retard, de manière que ladite commande de la continuité et de la discontinuité du courant par la première unité de réglage de courant (6a) soit démarrée après le démarrage de ladite commande de l'amplitude du courant par la seconde unité de réglage de courant (6b).

4. Appareil d'éclairage (A1) comprenant :
une charge d'éclairage (4) ; et
le dispositif gradateur (1) selon l'une quelconque des revendications 1 à 3.
